# EUROPEAN PATENT APPLICATION

(11) **EP 2 224 388 A1**
(43) Date of publication of application: **01.09.2010**
(21) Application number: 09154057.5
(22) Date of filing: 27.02.2009
(51) Int. Cl.: G06Q 10/00

(54) **Electronic device and method for creating calendar event records**

(71) Applicant: RESEARCH IN MOTION LIMITED, Waterloo, Ontario N2L 3W8 (CA)
(72) Inventor: Godfrey, James, Waterloo Ontario N2L 5Z5 (CA); Martin, Daryl, Waterloo Ontario N2L 5Z5 (CA); Wilson, J F Sean, Waterloo Ontario N2L 5Z5 (CA)
(74) Representative: Rickard, David John

(57) **Abstract**

A computer-implemented method of creating a calendar event record includes receiving a selection of an option to schedule a meeting from an electronic mail interface for an electronic mail message and rendering a calendar event record scheduling interface and automatically populating fields for the calendar event record based on fields from the electronic mail message.

## Description

### TECHNICAL FIELD

The present application relates to the creation of calendar event records at a portable electronic device and invitations for the calendar events.

### BACKGROUND DISCUSSION

Portable electronic devices including, for example, smart telephones and wireless PDAs are becoming increasingly common and typically integrate functions of personal information management such as calendaring and data communications such as e-mail, World Wide Web browsing and telecommunications in a single device. Such devices run on a wide variety of networks from data-only networks such as Mobitex and DataTAC to complex voice and data networks such as GSM/GPRS, CDMA, EDGE, UMTS and CDMA2000 networks.

Users commonly communicate with others using e-mail functionality of the portable electronic device. Users can also store calendar event details such as meeting particulars at the portable electronic device for display in an electronic calendar view on the device. Some portable electronic devices allow the user to schedule meetings with invitees by creating a new meeting and entering the details including the contact information, such as e-mail information, for each of the invitees. An electronic notification can then be sent to the invitees, typically in the form of an invitation sent via e-mail.

Unfortunately, when a user determines from an e-mail, for example, that a meeting is desired, the user must exit the e-mail application and start a calendar application for entry of calendar details. This requires that the user navigate through multiple display screens for creation of a calendar event record. The user may also be forced to remember details from the email for creation of the calendar event record while navigating between the e-mail and an interface for creation of a calendar event record.

Improvements in creating calendar event records are therefore desirable.

### SUMMARY

In a first aspect, there is provided a computer-implemented method of creating a calendar event record. The method includes receiving a selection of an option to schedule a meeting from an electronic mail interface for an electronic mail message and rendering a calendar event record scheduling interface and automatically populating fields for the calendar event record based on fields from the electronic mail message.

In another aspect, there is provided an electronic device for creating a calendar event record. The electronic device includes an output unit, an input unit, a memory device, a processor connected to the memory device, the input unit, and the output unit, and an application stored in the memory device for execution by the processor for receiving a selection of an option to schedule a meeting from an electronic mail interface for an electronic mail message and rendering a calendar event record scheduling interface and automatically populating fields for the calendar event record based on fields from the electronic mail message.

In yet another aspect, there is provided a computer program product for an electronic device, the computer program product including a computer-readable medium having computer-readable code embodied therein for receiving a selection of an option to schedule a meeting from an electronic mail interface for an electronic mail message and rendering a calendar event record scheduling interface and automatically populating fields for a calendar event record based on fields from the electronic mail message.

Advantageously, fields of the calendar event record are automatically populated with fields from the electronic mail. Thus, when a user receives a message and wishes to schedule a meeting including, for example, the sender and the recipients of the email message, an option can be selected to schedule a meeting, thereby proceeding to a calendar event record scheduling interface in which the Invited field is automatically populated with the sender and recipients of the email message. Further, the Subject field in the calendar event record scheduling interface can be automatically populated with the Subject field from the e-mail and a further field can be populated with the body from the e-mail. Thus, fewer screens are required to be rendered for creating the calendar event record, thereby reducing power consumption and increasing battery life between charging. Furthermore, fields of the calendar event record are automatically populated, reducing the time required for data entry by the user, further reducing power consumption and increasing battery life between charging by reducing device use time.

Other aspects and features of the present disclosure will become apparent to those ordinarily skilled in the art upon review of the following description of specific in conjunction with the accompanying figures.

### BRIEF DESCRIPTION OF THE DRAWINGS

Embodiments of the present application will now be described, by way of example only, with reference to the attached Figures, wherein:
Figure 1 is a block diagram of an exemplary embodiment of a portable electronic device;
Figure 2 is an exemplary block diagram of a communication subsystem component of Figure 1;
Figure 3 is a block diagram of an exemplary implementation of a node of a wireless network;
Figure 4 is a block diagram illustrating components of an exemplary configuration of a host system that the portable electronic device can communicate with;
Figure 5 is an exemplary portable electronic device according to one embodiment;
Figure 6 is a simplified flowchart depicting steps in a method of creating a calendar event record according to one embodiment;
Figures 7 to 9 show examples of screen shots in the method creating a calendar event record of Figure 6;
Figure 10 shows substeps in the method of creating the calendar event record according to one aspect; and
Figures 11 to 13 show examples of screen shots in the method of Figure 10.

### DESCRIPTION OF PREFERRED EMBODIMENTS

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

The embodiments described herein generally relate to a portable electronic device. Examples of portable electronic devices include mobile or handheld wireless communication devices such as pagers, cellular phones, cellular smart-phones, wireless organizers, personal digital assistants, computers, laptops, handheld wireless communication devices, wirelessly enabled notebook computers and the like.

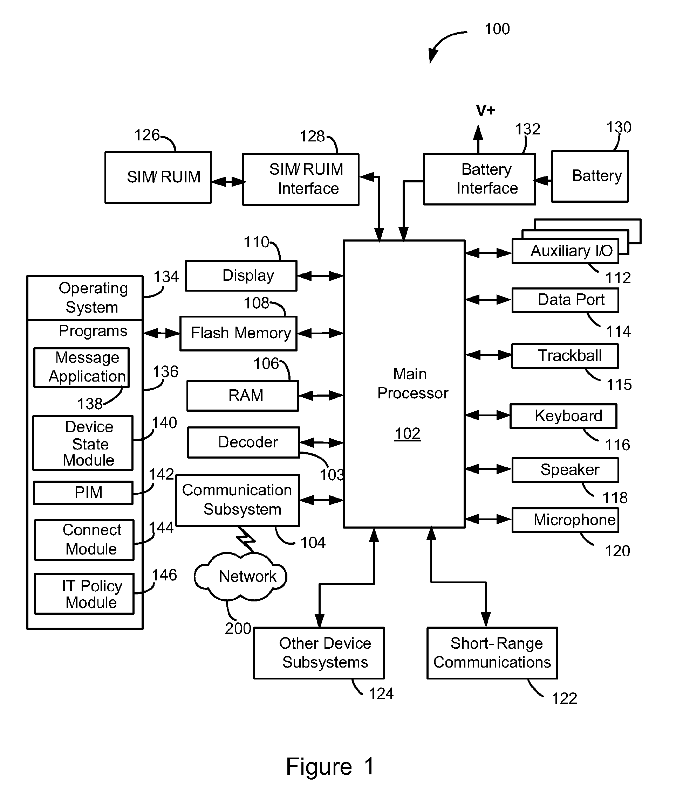

The portable electronic device may be a two-way communication device with advanced data communication capabilities including the capability to communicate with other portable electronic devices or computer systems through a network of transceiver stations. The portable electronic device may also have the capability to allow voice communication. Depending on the functionality provided by the portable electronic device, it may be referred to as a data messaging device, a two-way pager, a cellular telephone with data messaging capabilities, a wireless Internet appliance, or a data communication device (with or without telephony capabilities). To aid the reader in understanding the structure of the portable electronic device and how it communicates with other devices and host systems, reference will now be made to Figures 1 through 4.

Referring first to Figure 1, shown therein is a block diagram of an exemplary embodiment of a portable electronic device 100. The portable electronic device 100 includes a number of components such as a main processor 102 that controls the overall operation of the portable electronic device 100. Communication functions, including data and voice communications, are performed through a communication subsystem 104. Data received by the portable electronic device 100 can be decompressed and decrypted by a decoder 103, operating according to any suitable decompression techniques (e.g. YK decompression, and other known techniques) and encryption techniques (e.g. using an encryption technique such as Data Encryption Standard (DES), Triple DES, or Advanced Encryption Standard (AES)). The communication subsystem 104 receives messages from and sends messages to a wireless network 200. In this exemplary embodiment of the portable electronic device 100, the communication subsystem 104 is configured in accordance with the Global System for Mobile Communication (GSM) and General Packet Radio Services (GPRS) standards. The GSM/GPRS wireless network is used worldwide and it is expected that these standards will be superseded eventually by Enhanced Data GSM Environment (EDGE) and Universal Mobile Telecommunications Service (UMTS). New standards are still being defined, but it is believed that they will have similarities to the network behavior described herein, and it will also be understood by persons skilled in the art that the embodiments described herein are intended to use any other suitable standards that are developed in the future. The wireless link connecting the communication subsystem 104 with the wireless network 200 represents one or more different Radio Frequency (RF) channels, operating according to defined protocols specified for GSM/GPRS communications. With newer network protocols, these channels are capable of supporting both circuit switched voice communications and packet switched data communications.

Although the wireless network 200 associated with portable electronic device 100 is a GSM/GPRS wireless network in one exemplary implementation, other wireless networks may also be associated with the portable electronic device 100 in variant implementations. The different types of wireless networks that may be employed include, for example, data-centric wireless networks, voice-centric wireless networks, and dual-mode networks that can support both voice and data communications over the same physical base stations. Combined dual-mode networks include, but are not limited to, Code Division Multiple Access (CDMA) or CDMA2000 networks, GSM/GPRS networks (as mentioned above), and future third-generation (3G) networks such as EDGE and UMTS. Some other examples of data-centric networks include WiFi 802.11, Mobitex™ and DataTAC™ network communication systems. Examples of other voice-centric data networks include Personal Communication Systems (PCS) networks like GSM and Time Division Multiple Access (TDMA) systems. The main processor 102 also interacts with additional subsystems such as a Random Access Memory (RAM) 106, a flash memory 108, a display 110, an auxiliary input/output (I/O) subsystem 112, a data port 114, a trackball 115, a keyboard 116, a speaker 118, a microphone 120, short-range communications 122 and other device subsystems 124.

Some of the subsystems of the portable electronic device 100 perform communication-related functions, whereas other subsystems may provide "resident" or on-device functions. By way of example, the display 110, the trackball 115 and the keyboard 116 may be used for both communication-related functions, such as entering a text message for transmission over the network 200, and device-resident functions such as a calculator or task list.

The portable electronic device 100 can send and receive communication signals over the wireless network 200 after network registration or activation procedures have been completed. Network access is associated with a subscriber or user of the portable electronic device 100. To identify a subscriber, a SIM/RUIM card 126 (i.e. Subscriber Identity Module or a Removable User Identity Module) is inserted into a SIM/RUIM interface 128 in order to communicate with a network. The SIM card or RUIM 126 is one type of a conventional "smart card" that can be used to identify a subscriber of the portable electronic device 100 and to personalize the portable electronic device 100, among other things. In the present embodiment, the portable electronic device 100 is not fully operational for communication with the wireless network 200 without the SIM card 126. By inserting the SIM card/RUIM 126 into the SIM/RUIM interface 128, a subscriber can access all subscribed services. Services may include: web browsing and messaging such as e-mail, voice mail, Short Message Service (SMS), and Multimedia Messaging Services (MMS). More advanced services may include: point of sale, field service and sales force automation. The SIM card/RUIM 126 includes a processor and memory for storing information. Once the SIM card/RUIM 126 is inserted into the SIM/RUIM interface 128, it is coupled to the main processor 102. In order to identify the subscriber, the SIM card/RUIM 126 can include some user parameters such as an International Mobile Subscriber Identity (IMSI). An advantage of using the SIM card/RUIM 126 is that a subscriber is not necessarily bound by any single physical portable electronic device. The SIM card/RUIM 126 may store additional subscriber information for a portable electronic device as well, including datebook (or calendar) information and recent call information. Alternatively, user identification information can also be programmed into the flash memory 108.

The portable electronic device 100 is a battery-powered device and includes a battery interface 132 for receiving one or more rechargeable batteries 130. In at least some embodiments, the battery 130 can be a smart battery with an embedded microprocessor. The battery interface 132 is coupled to a regulator (not shown), which assists the battery 130 in providing power V+ to the portable electronic device 100. Although current technology makes use of a battery, future technologies such as micro fuel cells may provide the power to the portable electronic device 100.

The portable electronic device 100 also includes an operating system 134 and software components 136 which are described in more detail below. The operating system 134 and the software components 136 that are executed by the main processor 102 are typically stored in a persistent store such as the flash memory 108, which may alternatively be a read-only memory (ROM) or similar storage element (not shown). Those skilled in the art will appreciate that portions of the operating system 134 and the software components 136, such as specific device applications, or parts thereof, may be temporarily loaded into a volatile store such as the RAM 106. Other software components can also be included, as is well known to those skilled in the art.

The subset of software components 136 that control basic device operations, including data and voice communication applications are installed on the portable electronic device 100 during its manufacture. Other software applications include a message application 138 that can be any suitable software program that allows a user of the portable electronic device 100 to send and receive electronic messages. Various alternatives exist for the message application 138 as is well known to those skilled in the art. Messages that have been sent or received by the user are typically stored in the flash memory 108 of the portable electronic device 100 or some other suitable storage element in the portable electronic device 100. In at least some embodiments, some of the sent and received messages may be stored remotely from the device 100 such as in a data store of an associated host system that the portable electronic device 100 communicates with.

The software components 136 can further include a device state module 140, a Personal Information Manager (PIM) 142, and other suitable modules (not shown). The device state module 140 provides persistence, i.e. the device state module 140 ensures that important device data is stored in persistent memory, such as the flash memory 108, so that the data is not lost when the portable electronic device 100 is turned off or loses power.

The PIM 142 includes functionality for organizing and managing data items of interest to the user, such as, but not limited to, e-mail, contacts, calendar events, voice mails, appointments, and task items. PIM applications include, for example, calendar, address book, tasks and memo applications. The PIM applications have the ability to send and receive data items via the wireless network 200. PIM data items may be seamlessly integrated, synchronized, and updated via the wireless network 200 with the portable electronic device subscriber's corresponding data items stored and/or associated with a host computer system. This functionality creates a mirrored host computer on the portable electronic device 100 with respect to such items. This can be particularly advantageous when the host computer system is the portable electronic device subscriber's office computer system.

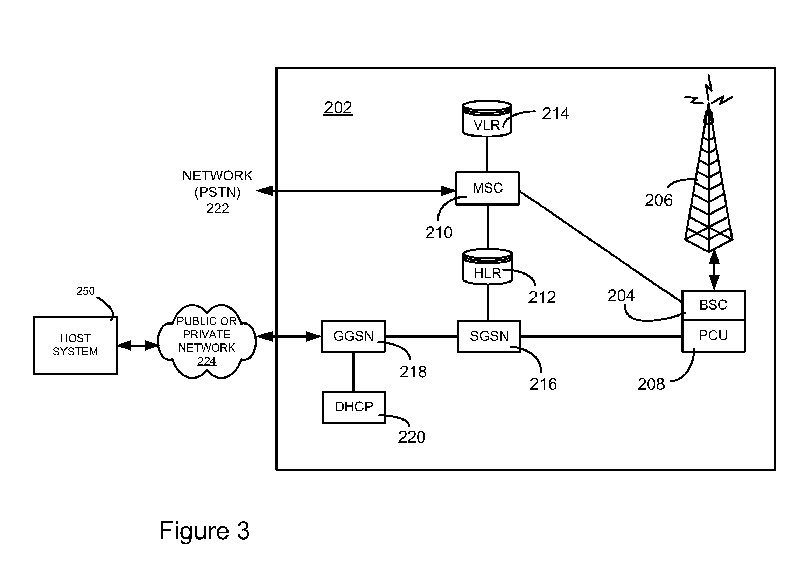

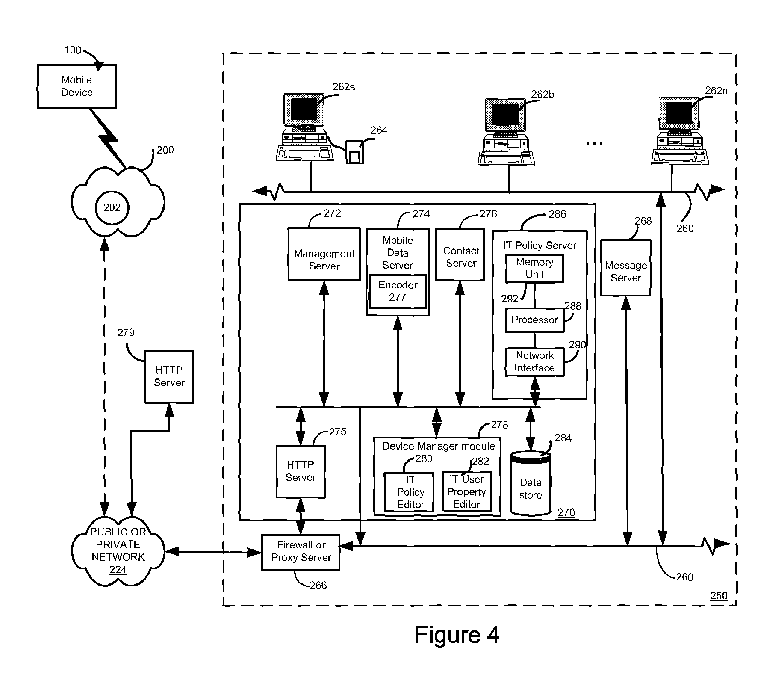

The software components 136 also includes a connect module 144, and an information technology (IT) policy module 146. The connect module 144 implements the communication protocols that are required for the portable electronic device 100 to communicate with the wireless infrastructure and any host system, such as an enterprise system, that the portable electronic device 100 is authorized to interface with. Examples of a wireless infrastructure and an enterprise system are given in Figures 3 and 4, which are described in more detail below.

The connect module 144 includes a set of APIs that can be integrated with the portable electronic device 100 to allow the portable electronic device 100 to use any number of services associated with the enterprise system. The connect module 144 allows the portable electronic device 100 to establish an end-to-end secure, authenticated communication pipe with the host system. A subset of applications for which access is provided by the connect module 144 can be used to pass IT policy commands from the host system to the portable electronic device 100. This can be done in a wireless or wired manner. These instructions can then be passed to the IT policy module 146 to modify the configuration of the device 100. Alternatively, in some cases, the IT policy update can also be done over a wired connection.

Other types of software applications can also be installed on the portable electronic device 100. These software applications can be third party applications, which are added after the manufacture of the portable electronic device 100. Examples of third party applications include games, calculators, utilities, etc.

The additional applications can be loaded onto the portable electronic device 100 through at least one of the wireless network 200, the auxiliary I/O subsystem 112, the data port 114, the short-range communications subsystem 122, or any other suitable device subsystem 124. This flexibility in application installation increases the functionality of the portable electronic device 100 and may provide enhanced on-device functions, communication-related functions, or both. For example, secure communication applications may enable electronic commerce functions and other such financial transactions to be performed using the portable electronic device 100.

The data port 114 enables a subscriber to set preferences through an external device or software application and extends the capabilities of the portable electronic device 100 by providing for information or software downloads to the portable electronic device 100 other than through a wireless communication network. The alternate download path may, for example, be used to load an encryption key onto the portable electronic device 100 through a direct and thus reliable and trusted connection to provide secure device communication.

The data port 114 can be any suitable port that enables data communication between the portable electronic device 100 and another computing device. The data port 114 can be a serial or a parallel port. In some instances, the data port 114 can be a USB port that includes data lines for data transfer and a supply line that can provide a charging current to charge the battery 130 of the portable electronic device 100.

The short-range communications subsystem 122 provides for communication between the portable electronic device 100 and different systems or devices, without the use of the wireless network 200. For example, the subsystem 122 may include an infrared device and associated circuits and components for short-range communication. Examples of short-range communication standards include standards developed by the Infrared Data Association (IrDA), Bluetooth, and the 802.11 family of standards developed by IEEE.

In use, a received signal such as a text message, an e-mail message, Web page download, or any other information is processed by the communication subsystem 104 and input to the main processor 102. The main processor 102 will then process the received signal for output to the display 110 or alternatively to the auxiliary I/O subsystem 112. A subscriber may also compose data items, such as e-mail messages, for example, using the keyboard 116 in conjunction with the display 110 and possibly the auxiliary I/O subsystem 112. The auxiliary subsystem 112 may include devices such as: a touch screen, mouse, track ball, infrared fingerprint detector, or a roller wheel with dynamic button pressing capability. The keyboard 116 is preferably an alphanumeric keyboard and/or telephone-type keypad. However, other types of keyboards may also be used. A composed item may be transmitted over the wireless network 200 through the communication subsystem 104.

For voice communications, the overall operation of the portable electronic device 100 is substantially similar, except that the received signals are output to the speaker 118, and signals for transmission are generated by the microphone 120. Alternative voice or audio I/O subsystems, such as a voice message recording subsystem, can also be implemented on the portable electronic device 100. Although voice or audio signal output is accomplished primarily through the speaker 118, the display 110 can also be used to provide additional information such as the identity of a calling party, duration of a voice call, or other voice call related information.

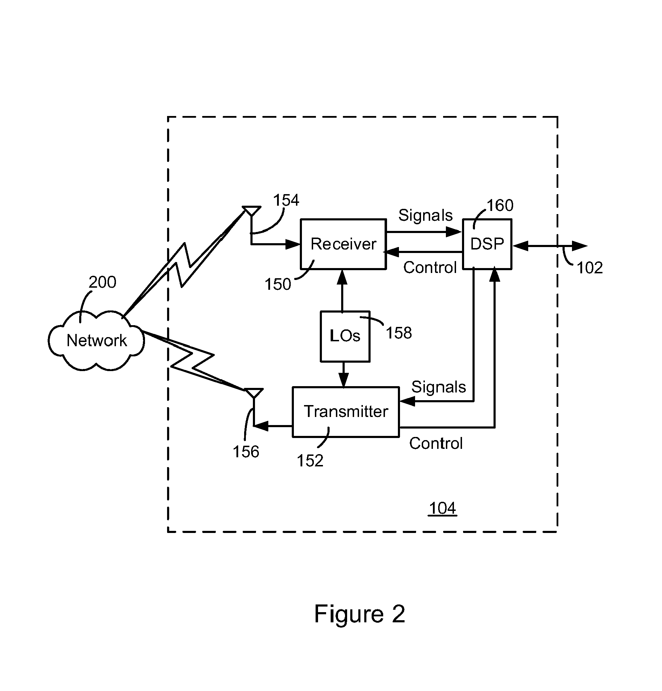

Referring now to Figure 2, an exemplary block diagram of the communication subsystem component 104 is shown. The communication subsystem 104 includes a receiver 150, a transmitter 152, as well as associated components such as one or more embedded or internal antenna elements 154 and 156, Local Oscillators (LOs) 158, and a processing module such as a Digital Signal Processor (DSP) 160. The particular design of the communication subsystem 104 is dependent upon the communication network 200 with which the portable electronic device 100 is intended to operate. Thus, it should be understood that the design illustrated in Figure 2 serves only as one example.

Signals received by the antenna 154 through the wireless network 200 are input to the receiver 150, which may perform such common receiver functions as signal amplification, frequency down conversion, filtering, channel selection, and analog-to-digital (A/D) conversion. A/D conversion of a received signal allows more complex communication functions such as demodulation and decoding to be performed in the DSP 160. In a similar manner, signals to be transmitted are processed, including modulation and encoding, by the DSP 160. These DSP-processed signals are input to the transmitter 152 for digital-to-analog (D/A) conversion, frequency up conversion, filtering, amplification and transmission over the wireless network 200 via the antenna 156. The DSP 160 not only processes communication signals, but also provides for receiver and transmitter control. For example, the gains applied to communication signals in the receiver 150 and the transmitter 152 may be adaptively controlled through automatic gain control algorithms implemented in the DSP 160.

The wireless link between the portable electronic device 100 and the wireless network 200 can contain one or more different channels, typically different RF channels, and associated protocols used between the portable electronic device 100 and the wireless network 200. An RF channel is a limited resource that should be conserved, typically due to limits in overall bandwidth and limited battery power of the portable electronic device 100.

When the portable electronic device 100 is fully operational, the transmitter 152 is typically keyed or turned on only when it is transmitting to the wireless network 200 and is otherwise turned off to conserve resources. Similarly, the receiver 150 is periodically turned off to conserve power until it is needed to receive signals or information (if at all) during designated time periods.

Referring now to Figure 3, a block diagram of an exemplary implementation of a node 202 of the wireless network 200 is shown. In practice, the wireless network 200 comprises one or more nodes 202. In conjunction with the connect module 144, the portable electronic device 100 can communicate with the node 202 within the wireless network 200. In the exemplary implementation of Figure 3, the node 202 is configured in accordance with General Packet Radio Service (GPRS) and Global Systems for Mobile (GSM) technologies. The node 202 includes a base station controller (BSC) 204 with an associated tower station 206, a Packet Control Unit (PCU) 208 added for GPRS support in GSM, a Mobile Switching Center (MSC) 210, a Home Location Register (HLR) 212, a Visitor Location Registry (VLR) 214, a Serving GPRS Support Node (SGSN) 216, a Gateway GPRS Support Node (GGSN) 218, and a Dynamic Host Configuration Protocol (DHCP) 220. This list of components is not meant to be an exhaustive list of the components of every node 202 within a GSM/GPRS network, but rather a list of components that are commonly used in communications through the network 200.

In a GSM network, the MSC 210 is coupled to the BSC 204 and to a landline network, such as a Public Switched Telephone Network (PSTN) 222 to satisfy circuit switched requirements. The connection through the PCU 208, the SGSN 216 and the GGSN 218 to a public or private network (Internet) 224 (also referred to herein generally as a shared network infrastructure) represents the data path for GPRS capable portable electronic devices. In a GSM network extended with GPRS capabilities, the BSC 204 also contains the Packet Control Unit (PCU) 208 that connects to the SGSN 216 to control segmentation, radio channel allocation and to satisfy packet switched requirements. To track the location of the portable electronic device 100 and availability for both circuit switched and packet switched management, the HLR 212 is shared between the MSC 210 and the SGSN 216. Access to the VLR 214 is controlled by the MSC 210.

The station 206 is a fixed transceiver station and together with the BSC 204 form fixed transceiver equipment. The fixed transceiver equipment provides wireless network coverage for a particular coverage area commonly referred to as a "cell". The fixed transceiver equipment transmits communication signals to and receives communication signals from portable electronic devices within its cell via the station 206. The fixed transceiver equipment normally performs such functions as modulation and possibly encoding and/or encryption of signals to be transmitted to the portable electronic device 100 in accordance with particular, usually predetermined, communication protocols and parameters, under control of its controller. The fixed transceiver equipment similarly demodulates and possibly decodes and decrypts, if necessary, any communication signals received from the portable electronic device 100 within its cell. Communication protocols and parameters may vary between different nodes. For example, one node may employ a different modulation scheme and operate at different frequencies than other nodes.

For all portable electronic devices 100 registered with a specific network, permanent configuration data such as a user profile is stored in the HLR 212. The HLR 212 also contains location information for each registered portable electronic device and can be queried to determine the current location of a portable electronic device. The MSC 210 is responsible for a group of location areas and stores the data of the portable electronic devices currently in its area of responsibility in the VLR 214. Further, the VLR 214 also contains information on portable electronic devices that are visiting other networks. The information in the VLR 214 includes part of the permanent portable electronic device data transmitted from the HLR 212 to the VLR 214 for faster access. By moving additional information from a remote HLR 212 node to the VLR 214, the amount of traffic between these nodes can be reduced so that voice and data services can be provided with faster response times and at the same time requiring less use of computing resources.

The SGSN 216 and the GGSN 218 are elements added for GPRS support; namely packet switched data support, within GSM. The SGSN 216 and the MSC 210 have similar responsibilities within the wireless network 200 by keeping track of the location of each portable electronic device 100. The SGSN 216 also performs security functions and access control for data traffic on the wireless network 200. The GGSN 218 provides internetworking connections with external packet switched networks and connects to one or more SGSN's 216 via an Internet Protocol (IP) backbone network operated within the network 200. During normal operations, a given portable electronic device 100 must perform a "GPRS Attach" to acquire an IP address and to access data services. This requirement is not present in circuit switched voice channels as Integrated Services Digital Network (ISDN) addresses are used for routing incoming and outgoing calls. Currently, all GPRS capable networks use private, dynamically assigned IP addresses, thus requiring the DHCP server 220 connected to the GGSN 218. There are many mechanisms for dynamic IP assignment, including using a combination of a Remote Authentication Dial-In User Service (RADIUS) server and a DHCP server. Once the GPRS Attach is complete, a logical connection is established from a portable electronic device 100, through the PCU 208, and the SGSN 216 to an Access Point Node (APN) within the GGSN 218. The APN represents a logical end of an IP tunnel that can either access direct Internet compatible services or private network connections. The APN also represents a security mechanism for the network 200, insofar as each portable electronic device 100 must be assigned to one or more APNs and portable electronic devices 100 cannot exchange data without first performing a GPRS Attach to an APN that it has been authorized to use. The APN may be considered to be similar to an Internet domain name such as "myconnection.wireless.com".

Once the GPRS Attach operation is complete, a tunnel is created and all traffic is exchanged within standard IP packets using any protocol that can be supported in IP packets. This includes tunneling methods such as IP over IP as in the case with some IPSecurity (IPsec) connections used with Virtual Private Networks (VPN). These tunnels are also referred to as Packet Data Protocol (PDP) Contexts and there are a limited number of these available in the network 200. To maximize use of the PDP Contexts, the network 200 will run an idle timer for each PDP Context to determine if there is a lack of activity. When a portable electronic device 100 is not using its PDP Context, the PDP Context can be de-allocated and the IP address returned to the IP address pool managed by the DHCP server 220.

Referring now to Figure 4, shown therein is a block diagram illustrating components of an example of a configuration of a host system 250 that the portable electronic device 100 can communicate with in conjunction with the connect module 144. The host system 250 will typically be a corporate enterprise or other local area network (LAN), but may also be a home office computer or some other private system, for example, in variant implementations. In this example shown in Figure 4, the host system 250 is depicted as a LAN of an organization to which a user of the portable electronic device 100 belongs. Typically, a plurality of portable electronic devices can communicate wirelessly with the host system 250 through one or more nodes 202 of the wireless network 200.

The host system 250 comprises a number of network components connected to each other by a network 260. For instance, a user's desktop computer 262a with an accompanying cradle 264 for the user's portable electronic device 100 is situated on a LAN connection. The cradle 264 for the portable electronic device 100 can be coupled to the computer 262a by a serial or a Universal Serial Bus (USB) connection, for example. Other user computers 262b-262n are also situated on the network 260, and each may or may not be equipped with an accompanying cradle 264. The cradle 264 facilitates the loading of information (e.g. PIM data, private symmetric encryption keys to facilitate secure communications) from the user computer 262a to the portable electronic device 100, and may be particularly useful for bulk information updates often performed in initializing the portable electronic device 100 for use. The information downloaded to the portable electronic device 100 may include certificates used in the exchange of messages.

It will be understood by persons skilled in the art that the user computers 262a-262n will typically also be connected to other peripheral devices, such as printers, etc. which are not explicitly shown in Figure 4. Furthermore, only a subset of network components of the host system 250 are shown in Figure 4 for ease of exposition, and it will be understood by persons skilled in the art that the host system 250 will comprise additional components that are not explicitly shown in Figure 4 for this exemplary configuration. More generally, the host system 250 may represent a smaller part of a larger network (not shown) of the organization, and may comprise different components and/or be arranged in different topologies than that shown in the exemplary embodiment of Figure 4.

To facilitate the operation of the portable electronic device 100 and the wireless communication of messages and message-related data between the portable electronic device 100 and components of the host system 250, a number of wireless communication support components 270 can be provided. In some implementations, the wireless communication support components 270 can include a management server 272, a mobile data server (MDS) 274, a web server, such as Hypertext Transfer Protocol (HTTP) server 275, a contact server 276, and a device manager module 278. HTTP servers can also be located outside the enterprise system, as indicated by the HTTP server 275 attached to the network 224. The device manager module 278 includes an IT Policy editor 280 and an IT user property editor 282, as well as other software components for allowing an IT administrator to configure the portable electronic devices 100. In an alternative embodiment, there may be one editor that provides the functionality of both the IT policy editor 280 and the IT user property editor 282. The support components 270 also include a data store 284, and an IT policy server 286. The IT policy server 286 includes a processor 288, a network interface 290 and a memory unit 292. The processor 288 controls the operation of the IT policy server 286 and executes functions related to the standardized IT policy as described below. The network interface 290 allows the IT policy server 286 to communicate with the various components of the host system 250 and the portable electronic devices 100. The memory unit 292 can store functions used in implementing the IT policy as well as related data. Those skilled in the art know how to implement these various components. Other components may also be included as is well known to those skilled in the art. Further, in some implementations, the data store 284 can be part of any one of the servers.

In this exemplary embodiment, the portable electronic device 100 communicates with the host system 250 through node 202 of the wireless network 200 and a shared network infrastructure 224 such as a service provider network or the public Internet. Access to the host system 250 may be provided through one or more routers (not shown), and computing devices of the host system 250 may operate from behind a firewall or proxy server 266. The proxy server 266 provides a secure node and a wireless internet gateway for the host system 250. The proxy server 266 intelligently routes data to the correct destination server within the host system 250.

In some implementations, the host system 250 can include a wireless VPN router (not shown) to facilitate data exchange between the host system 250 and the portable electronic device 100. The wireless VPN router allows a VPN connection to be established directly through a specific wireless network to the portable electronic device 100. The wireless VPN router can be used with the Internet Protocol (IP) Version 6 (IPV6) and IP-based wireless networks. This protocol can provide enough IP addresses so that each portable electronic device has a dedicated IP address, making it possible to push information to a portable electronic device at any time. An advantage of using a wireless VPN router is that it can be an off-the-shelf VPN component, and does not require a separate wireless gateway and separate wireless infrastructure. A VPN connection can preferably be a Transmission Control Protocol (TCP)/IP or User Datagram Protocol (UDP)/IP connection for delivering the messages directly to the portable electronic device 100 in this alternative implementation.

Messages intended for a user of the portable electronic device 100 are initially received by a message server 268 of the host system 250. Such messages may originate from any number of sources. For instance, a message may have been sent by a sender from the computer 262b within the host system 250, from a different portable electronic device (not shown) connected to the wireless network 200 or a different wireless network, or from a different computing device, or other device capable of sending messages, via the shared network infrastructure 224, possibly through an application service provider (ASP) or Internet service provider (ISP), for example.

The message server 268 typically acts as the primary interface for the exchange of messages, particularly e-mail messages, within the organization and over the shared network infrastructure 224. Each user in the organization that has been set up to send and receive messages is typically associated with a user account managed by the message server 268. Some exemplary implementations of the message server 268 include a Microsoft Exchange™ server, a Lotus Domino™server, a Novell Groupwise™server, or another suitable mail server installed in a corporate environment. In some implementations, the host system 250 may comprise multiple message servers 268. The message server provides additional functions including calendaring, contacts and tasks and supports data storage.

When messages are received by the message server 268, they are typically stored in a data store associated with the message server 268. In at least some embodiments, the data store may be a separate hardware unit, such as data store 284, that the message server 268 communicates with. Messages can be subsequently retrieved and delivered to users by accessing the message server 268. For instance, an e-mail client application operating on a user's computer 262a may request the e-mail messages associated with that user's account stored on the data store associated with the message server 268. These messages are then retrieved from the data store and stored locally on the computer 262a. The data store associated with the message server 268 can store copies of each message that is locally stored on the portable electronic device 100. Alternatively, the data store associated with the message server 268 can store all of the messages for the user of the portable electronic device 100 and only a smaller number of messages can be stored on the portable electronic device 100 to conserve memory. For instance, the most recent messages (i.e. those received in the past two to three months for example) can be stored on the portable electronic device 100.

When operating the portable electronic device 100, the user may wish to have e-mail messages retrieved for delivery to the portable electronic device 100. The message application 138 operating on the portable electronic device 100 may also request messages associated with the user's account from the message server 268. The message application 138 may be configured (either by the user or by an administrator, possibly in accordance with an organization's IT policy) to make this request at the direction of the user, at some pre-defined time interval, or upon the occurrence of some pre-defined event. In some implementations, the portable electronic device 100 is assigned its own e-mail address, and messages addressed specifically to the portable electronic device 100 are automatically redirected to the portable electronic device 100 as they are received by the message server 268.

The management server 272 can be used to specifically provide support for the management of, for example, messages, such as e-mail messages, that are to be handled by portable electronic devices. Generally, while messages are still stored on the message server 268, the management server 272 can be used to control when, if, and how messages are sent to the portable electronic device 100. The management server 272 also facilitates the handling of messages composed on the portable electronic device 100, which are sent to the message server 268 for subsequent delivery.

For example, the management server 272 may monitor the user's "mailbox" (e.g. the message store associated with the user's account on the message server 268) for new e-mail messages, and apply user-definable filters to new messages to determine if and how the messages are relayed to the user's portable electronic device 100. The management server 272 may also, through an encoder 273, compress messages, using any suitable compression technology (e.g. YK compression, and other known techniques) and encrypt messages (e.g. using an encryption technique such as Data Encryption Standard (DES), Triple DES, or Advanced Encryption Standard (AES)), and push them to the portable electronic device 100 via the shared network infrastructure 224 and the wireless network 200. The management server 272 may also receive messages composed on the portable electronic device 100 (e.g. encrypted using Triple DES), decrypt and decompress the composed messages, re-format the composed messages if desired so that they will appear to have originated from the user's computer 262a, and re-route the composed messages to the message server 268 for delivery.

Certain properties or restrictions associated with messages that are to be sent from and/or received by the portable electronic device 100 can be defined (e.g. by an administrator in accordance with IT policy) and enforced by the management server 272. These may include whether the portable electronic device 100 may receive encrypted and/or signed messages, minimum encryption key sizes, whether outgoing messages must be encrypted and/or signed, and whether copies of all secure messages sent from the portable electronic device 100 are to be sent to a pre-defined copy address, for example.

The management server 272 may also be adapted to provide other control functions, such as only pushing certain message information or pre-defined portions (e.g. "blocks") of a message stored on the message server 268 to the portable electronic device 100. For example, in some cases, when a message is initially retrieved by the portable electronic device 100 from the message server 268, the management server 272 may push only the first part of a message to the portable electronic device 100, with the part being of a pre-defined size (e.g. 2 KB). The user can then request that more of the message be delivered in similar-sized blocks by the management server 272 to the portable electronic device 100, possibly up to a maximum pre-defined message size. Accordingly, the management server 272 facilitates better control over the type of data and the amount of data that is communicated to the portable electronic device 100, and can help to minimize potential waste of bandwidth or other resources.

The MDS 274 encompasses any other server that stores information that is relevant to the corporation. The mobile data server 274 may include, but is not limited to, databases, online data document repositories, customer relationship management (CRM) systems, or enterprise resource planning (ERP) applications. The MDS 274 can also connect to the Internet or other public network, through HTTP server 275 or other suitable web server such as an File Transfer Protocol (FTP) server, to retrieve HTTP webpages and other data. Requests for webpages are typically routed through MDS 274 and then to HTTP server 275, through suitable firewalls and other protective mechanisms. The web server then retrieves the webpage over the Internet, and returns it to MDS 274. As described above in relation to management server 272, MDS 274 is typically provided, or associated, with an encoder 277 that permits retrieved data, such as retrieved webpages, to be compressed, using any suitable compression technology (e.g. YK compression, and other known techniques), and encrypted (e.g. using an encryption technique such as DES, Triple DES, or AES), and then pushed to the portable electronic device 100 via the shared network infrastructure 224 and the wireless network 200.

The contact server 276 can provide information for a list of contacts for the user in a similar fashion as the address book on the portable electronic device 100. Accordingly, for a given contact, the contact server 276 can include the name, phone number, work address and e-mail address of the contact, among other information. The contact server 276 can also provide a global address list that contains the contact information for all of the contacts associated with the host system 250.

It will be understood by persons skilled in the art that the management server 272, the MDS 274, the HTTP server 275, the contact server 276, the device manager module 278, the data store 284 and the IT policy server 286 do not need to be implemented on separate physical servers within the host system 250. For example, some or all of the functions associated with the management server 272 may be integrated with the message server 268, or some other server in the host system 250. Alternatively, the host system 250 may comprise multiple management servers 272, particularly in variant implementations where a large number of portable electronic devices need to be supported.

The device manager module 278 provides an IT administrator with a graphical user interface with which the IT administrator interacts to configure various settings for the portable electronic devices 100. As mentioned, the IT administrator can use IT policy rules to define behaviors of certain applications on the portable electronic device 100 that are permitted such as phone, web browser or Instant Messenger use. The IT policy rules can also be used to set specific values for configuration settings that an organization requires on the portable electronic devices 100 such as auto signature text, WLAN/VoIP/VPN configuration, security requirements (e.g. encryption algorithms, password rules, etc.), specifying themes or applications that are allowed to run on the portable electronic device 100, and the like.

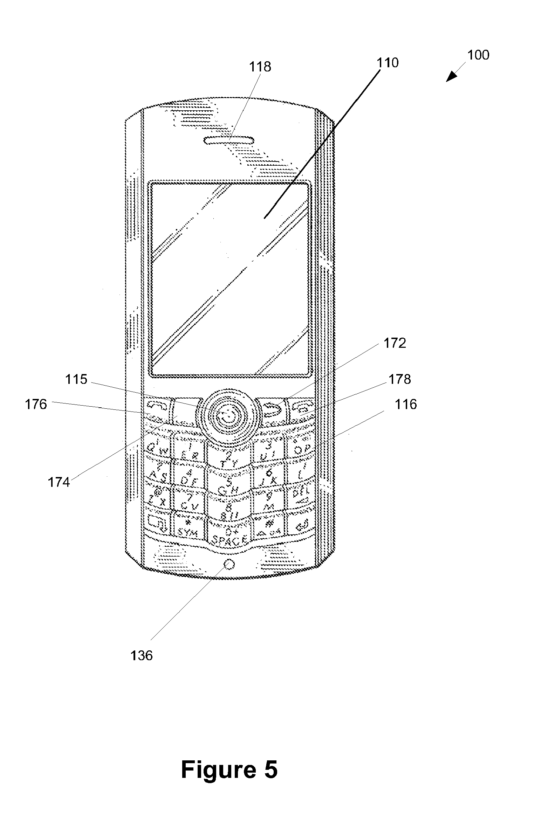

Reference is now made to Figure 5 which shows an example of a portable electronic device 100 in accordance with an embodiment. It will be appreciated that the present application is not limited to the portable electronic device 100 shown in Figure 5 and many other portable electronic devices are possible. The portable electronic device 100 includes a housing 170 that frames the display 110, the speaker 118, the trackball 115, the keyboard 116, and the microphone 136. The trackball 115 can be rolled within a socket for user-input and can be inwardly depressed as a means for providing additional user-input. The keyboard 116 includes input keys such as an exit key 172, a menu key 174, an initiate call key 176 and an end call key 178. The housing 170 is made from a suitable material as will occur to those skilled in the art and can be stored, for example, in a holster (not shown) that includes an attachment for attaching to a user's belt.

A method of creating a calendar event record according to an embodiment includes receiving a selection of an option to schedule a meeting from an electronic mail interface for an electronic mail message and rendering a calendar event record scheduling interface and automatically populating fields for the calendar event record based on fields from the electronic mail message.

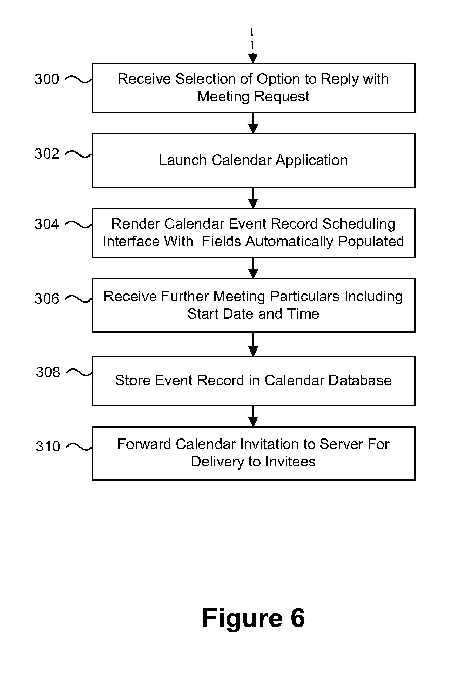

Referring now to Figure 6, there is shown a simplified flowchart depicting steps in a method of creating a calendar event record according to one embodiment. It will be appreciated that each of the steps of Figure 6 are carried out by routines or subroutines of the software executed by the main processor 102. Coding of software for carrying out such steps is well within the scope of a person of ordinary skill in the art having regard to the present description.

A selection of an option to reply to an e-mail with a meeting request is received (step 300) and in response, the calendar application is launched at the portable electronic device 100, from the e-mail application (step 302). A calendar event record scheduling interface is rendered including fields that are automatically populated with fields from the e-mail from which the option to reply with a meeting request was received (step 304). Further meeting particulars are received in fields of the calendar event record scheduling interface including a start date and time for the calendar event record (step 306). The calendar event record is stored in a calendar database at the portable electronic device (step 308) and the calendar invitation is forwarded to the server for delivery to the invitees (step 310).

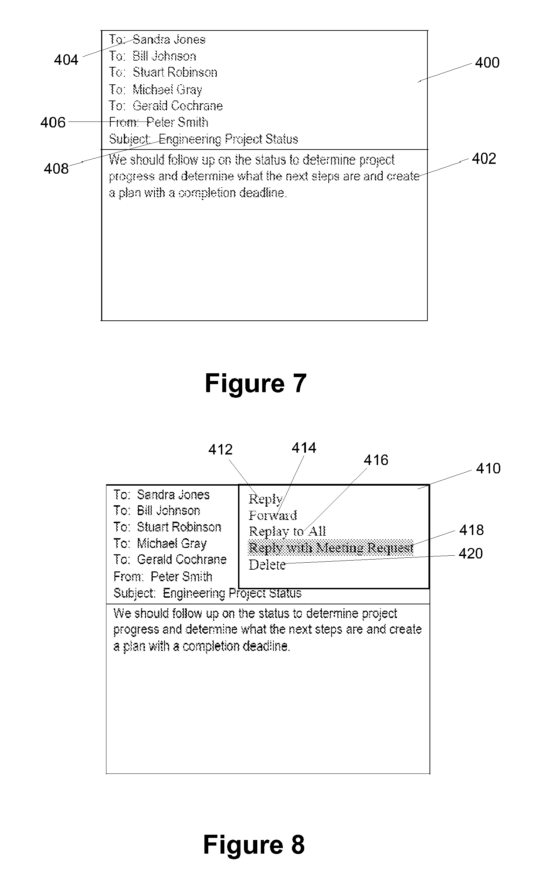

Continued reference is made to Figure 6 with additional reference to Figures 7 to 9 to describe one example of the method of creating a calendar event record. In the present example, a number of messages, including e-mail messages, are sent from and received at the portable electronic device 100. The e-mail messages can be any suitable e-mail messages including messages sent and received over the wireless network 200. The e-mail messages are stored in the flash memory 108 and can be displayed in a list using the message application 138. It will be appreciated that each one of the e-mail messages in the list can be selected by, for example, scrolling using the trackball 115 to highlight the message followed by selection of an option to open the e-mail message. Referring to Figure 7, an example of an e-mail message received at the portable electronic device 100 is shown. As shown, the e-mail message includes a header 400 and a body 402. The header 400 includes correspondents including a recipient or "To" field 404 listing the recipients of the electronic mail, which in the present example include "Sandra Jones", "Bill Johnson", "Stuart Robinson", "Michael Gray", and "Gerald Cochrane" and one sender or "From" field 406. In the present example, each of the recipients are listed by name rather than e-mail address. It will be appreciated that recipients in the recipient field 404 can also be listed by e-mail address. Further, each of the names listed in the recipient field 404 are associated with respective e-mail addresses, for example for users of the host system 250.

The header 400 also includes the sender or "From" field 406, identifying the sender of the e-mail message. In the present example, the sender field 406 is populated by the name "Peter Smith". Again, it will be appreciated that the sender can also be listed by e-mail address in the sender field 406 and that the name of the sender in the sender field 406 is associated with an e-mail address for a user of the host system 250.

In addition to the correspondents in the recipient field 404 and the sender field 406, the header 400 includes a Subject field 408, labeled "Subject" and populated with the text "Engineering Project Status" in the present example. Other fields are possible including, for example, the date and time that the email is sent or received.

The body 402 of the e-mail is populated with, for example, text which in the present example includes "We should follow up on the status to determine project progress and determine what the next steps are and create a plan with a completion deadline".

Selection of an option to reply to the e-mail with a meeting request is received at step 300. The option can be selected in any suitable manner such as, for example, from a submenu list of options such as the submenu list of options 410 shown in the example of Figure 8. Such a submenu may be rendered in response to user depression of the trackball 115 and any one of the options may be selected by, for example, scrolling to the desired option using the trackball 115 followed by depression of the trackball 115. As shown, the submenu list of options 410 may include options to "Reply" 412 for replying to the sender of the e-mail, "Forward" 414 for forwarding the e-mail to a further e-mail address or addresses, "Reply to All" 416 for replying to the sender and to each of the recipients of the e-mail, Reply with Meeting Request" 418 as described herein and "Delete" 420 for deleting the e-mail.

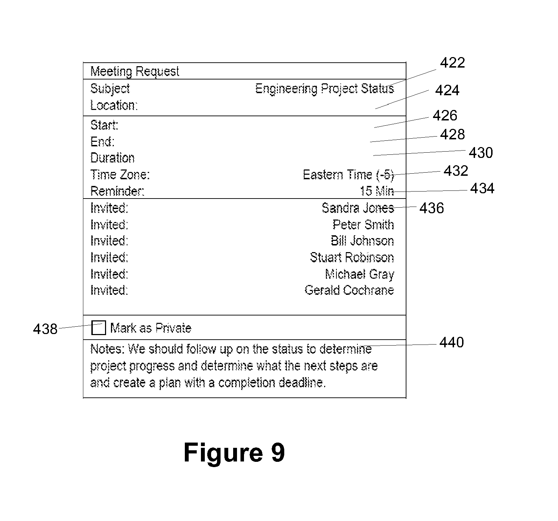

Regardless of how the option to reply with a meeting request is provided or selected, the calendar application is launched upon receipt of selection of the option to reply to the e-mail with a meeting request (step 302) and a calendar event record scheduling interface is rendered (step 304). The calendar event is also referred to herein as a meeting. One example of a calendar event record scheduling interface is shown in Figure 9. In the example of the calendar event record scheduling interface shown in Figure 9, several fields are available for entry of calendar event record particulars, including a "Subject" field 422, a "Location" field 424, a "Start" field 426, an "End" field 428, a "Duration" field 430, a "Time Zone" field 432, a "Reminder" field 434, an "Invited" field 436, a "Mark as Private" field 438 and a "Notes" field 440. It will be appreciated that the "Subject" field 422 is for entry of the subject of the meeting and, in the present example, provides the subject line in any invitation sent to the invitees via electronic mail. The "Location" field 424 is provided for entry of the location of the meeting. The "Start" field 426 is provided for entry of the start date and time of the meeting. The "End" field 428 is provided for entry of the end date and time of the meeting. The "Duration" field 430 is calculated based on the "Start" field 426 and the "End" field 428 data. Alternatively, the "Duration field 430 can be entered and the "End" field 428 determined based on the "Start" field 426 and the "Duration" field 430 data. The "Time Zone" field 432 is provided for entry of an appropriate time zone. The "Reminder" field 434 is provided for entry of a period of time for a reminder of the meeting. Any suitable reminder can be provided to the user in advance of the meeting by the period of time in the "Reminder" field 434. Thus, in the example of Figure 9, a reminder is set to be provided 15 minutes prior to the meeting. The "Invited" field 436 includes invitees to the meeting. The "Mark as Private" field 438 is provided for selection for private calendar event records, the details of which are not shared with others. The "Notes" field 440 is provided for entry of any notes relating to the meeting and may include, for example, suitable text such as special instructions for meeting preparation, special phone numbers and codes for entry into a teleconference meeting, or any other suitable information.

Some of the fields in the calendar event record scheduling interface are automatically populated based on fields in the e-mail message from which the option was selected to reply with a meeting request (step 304). The "Subject" field 422 in the calendar event record scheduling interface is automatically populated with the data from the Subject field 408 from the e-mail message. Thus, in the present example, the "Subject" field 422 in the calendar event record scheduling interface is automatically populated with the subject "Engineering Project Status".

The "Invited" field 436 in the calendar event record scheduling interface is automatically populated with the correspondents from the e-mail message including recipients from the recipient field 404 as well as the sender from the sender field 406. Therefore, the "Invited" field 436 in the calendar event record in the present example is populated with the recipients "Sandra Jones", "Bill Johnson", "Stuart Robinson", and "Gerald Cochrane". In addition, the "Invited" field 436 is populated with the sender "Peter Smith". In the present example, each of the invitees are listed by name. It will be appreciated that the invitees in the "Invited" field 436 can also be listed by e-mail address. Further, each of the names listed in the "Invited" field 436 are associated with the respective e-mail addresses for the users. Further still, the invitee "Sandra Jones" in the present example may be the organizer of the meeting and for the present example, may be the user of the portable electronic device 100.

In addition to the "Subject" field 422 and the "Invited" field 436, the "Notes" field 440 is automatically populated with the body 402 of the e-mail message. Thus, the "Notes" field 440 in the present example is populated with the text "We should follow up on the status to determine project progress and determine what the next steps are and create a plan with a completion deadline."

In the present example, the remainder of the fields in the calendar event record scheduling interface are not populated based on fields from the e-mail message. Such fields include, for example, the "Location" field 424, the "Start" field 426, the "End" field 428 and the "Duration" field 430. Thus, suitable data can be entered into these fields. It is also contemplated that further invitees can be entered into the "Invited" field 436. Further, some fields in the calendar event scheduling interface may be populated with default data such as, for example, the "Time Zone" field 432, and the "Reminder" Field. Further meeting particulars including, for example, a start date and time for the meeting are received along with an end date and time for the meeting or a duration are received (step 306). In the present example, the further meeting particulars may be received upon user-entry using, for example, a combination of the trackball 115 and the keyboard 116.

The calendar event record is stored in a calendar database at the portable electronic device (step 308). The calendar event record may be stored in response to receipt of a "save" or "send" option, for example. Thus, the calendar event record is stored locally in the calendar database at the portable electronic device 100 in response to receipt of a user selection. The calendar event record may also be forwarded to the host computer system 250 for storage in the respective calendar database in the data store 284 and for delivery of the meeting invitation to each of the included invitees (step 310). The meeting invitation is sent via electronic mail for receipt at respective electronic devices of the invitees.

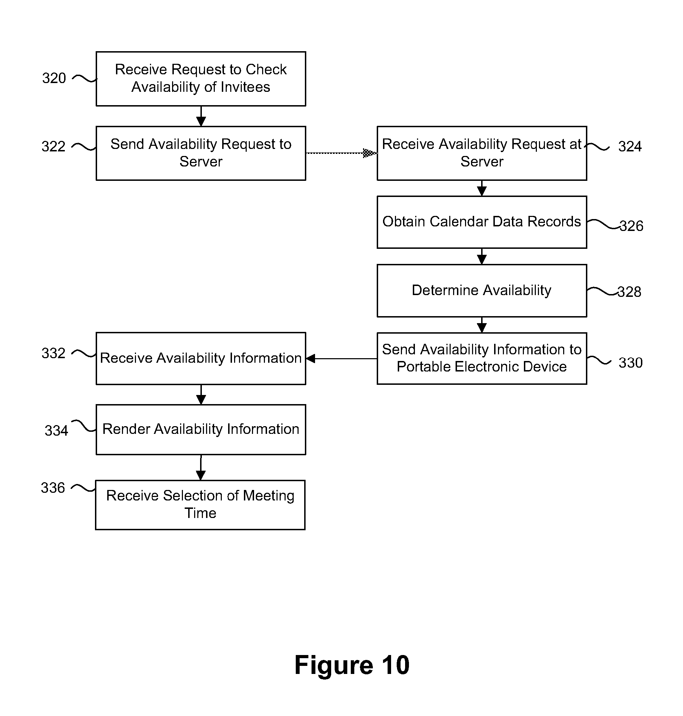

In the above-described example, the user enters the meeting particulars that are not automatically populated. Thus, the start date and time are entered in the "Start" field 426. Similarly, the end date and time can be entered in the "End" field 428. Alternatively, the duration can be entered in the "Duration" field 430. Rather than receiving the additional meeting particulars by user entry at step 306, the user can request suitable times based on availability of the invitees according the "Invited" field 436 in another embodiment. Reference is made to Figure 10 to describe sub-steps of step 306 in the method of creating the calendar event according to another embodiment. The remainder of the steps of Figure 6 are similar to those described above and therefore are not described again.

A request for invitee availability is received (step 320), sent to the host computer system 250 (step 322), and received at the host computer system (step 324). Calendar event records that fall within a set of time constraints for each invitee for whom the calendar event records are available are obtained at the host computer system 250 by the management server 272 (step 326). The time constraints can be based on a number of factors including, for example, the current date and time according to the internal clock or the date displayed in the calendar view upon receipt of user-selection of the option to schedule the meeting. The availability information is determined (step 328) based on the calendar event records retrieved at step 326, and the availability information is sent to the portable electronic device 100 (step 330).

The availability information is received at the portable electronic device 100 (step 332) and is rendered in a calendar interface (step 334) for user selection of a suitable time for the meeting (step 336).

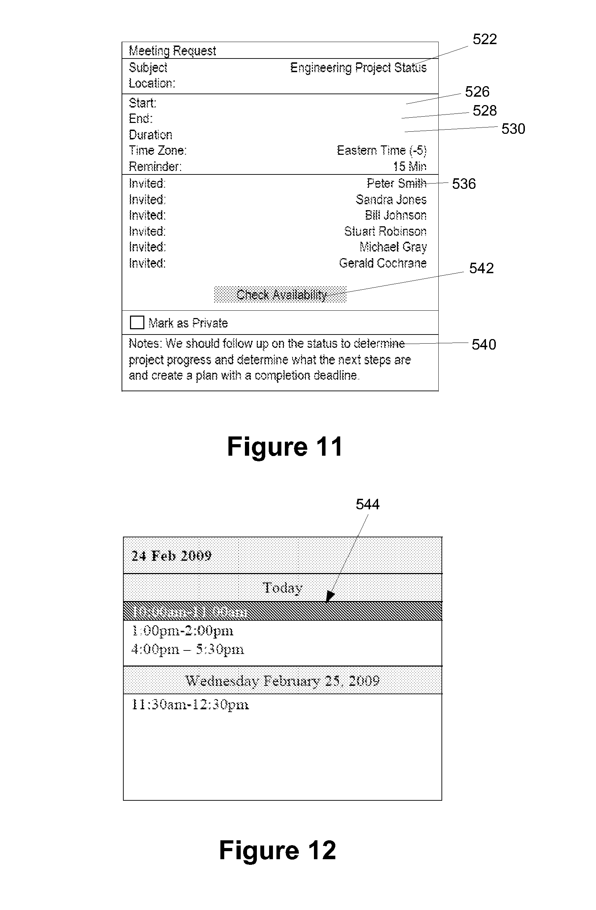

Continued reference is made to Figure 10 with additional reference to Figures 11 and 12 to describe one example of the present embodiment. Referring to Figure 11, the "Subject" field 522, the "Invited" field 536 and the "Notes" field 540 are automatically populated with data from the Subject field 408, the recipient field 404 and the sender field 406, and the body 402, respectively, of the e-mail message, as in the example described above with reference to Figures 7 to 9. Thus, in the present example, the "Subject" field 522 in the calendar event record scheduling interface is automatically populated with the subject "Engineering Project Status". The "Invited" field 536 is automatically populated with the recipients "Sandra Jones", "Bill Johnson", "Stuart Robinson", Michael Gray, and "Gerald Cochrane" and with the sender "Peter Smith". Further, the "Notes" field 540 is automatically populated with the body 402 of the e-mail message.

Rather than simply choosing a time for the meeting, the user selects an option to check the availability of the invitees, which is received at the portable electronic device (step 320). In the example of Figure 11, the user selects the option "Check Availability" 542. User-selection of the option "Check Availability" 542 may be accomplished by, for example, scrolling using the trackball 115 to highlight the option "Check Availability" 542, followed by inward depression of the trackball 115 to select the option. In response to receipt of the request to check availability of the invitees at the processor 102, a request for invitee availability is sent to the host computer system 250 in the form of a query for calendar event information that falls within a set of time constraints (step 322). The time constraints can be any suitable constraints such as time constraints defining the present day, the present week or any other suitable time period. The portable electronic device 100 then awaits a response from the host computer system 250.

At step 324 the request to check availability of the invitees is received at the host computer system 250 and the management server 272 retrieves calendar event information for each of the invitees (step 326). The management server 272 retrieves all calendar event records that fall within the set of time constraints for each invitee. Availability information is then determined from the calendar event records retrieved (step 328). According to the present example, the availability information is determined by creating a time-ordered list of calendar event records for all of the invitees and determining start and end times of common free time periods in the time-ordered list. For example, the start times of free time periods are determined based on either the start time of a calendar day or end times of calendar event records while the end times of the free time periods are determined based on either an end time of the calendar day or start times of the next calendar event in the time-ordered list. The common free time periods determined are added to a list of common free time periods. The availability information in the form of the list of common free time periods determined at step 328 is then sent to the portable electronic device 100 (step 330).

Upon receipt of the availability information at the portable electronic device (step 332), the availability information is rendered on the display 110 of the portable electronic device 100 (step 334). Figure 12 is an example of a screen shot of the display 110 showing availability information for each of the invitees. In the example of Figure 12, a list 544 of time periods during which each of the invitees is available is shown. In the present example, the user can scroll to any one of the time periods in the list 544 and can select one of the time periods. When one of the time periods is selected, the selection is received at the portable electronic device 100 (step 336) and the "Start" field 526, "End" field 528 and "Duration" field 530 are populated based on the start date and time and end date and time of the selected time period. It will be appreciated that any of the "Start" field 526, "End" field 528 and "Duration" field 530 can then be modified, for example, to change the duration to a suitable duration. The remainder of the steps of Figure 6 are similar to those described above and therefore are not further described in the present example.

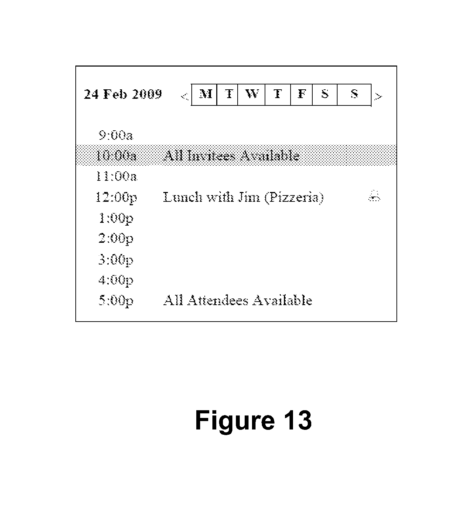

Figure 13 shows another example of a screen shot of the display 110 showing availability information for each of the invitees. In the example of Figure 13, availability information is included in a day view of calendar events of the meeting organizer. Thus, the time periods during which each of the invitees is available is shown within the day view in the calendar application (step 334). Again, the user can scroll to any one of the time periods in the day view and can select the time period. When one of the time periods is selected, the selection is received at the portable electronic device 100 (step 336) and the "Start" field 526, "End" field 528 and "Duration" field 530 are populated based on the start date and time and end date and time of the selected time period. Again any of the "Start" field 526, "End" field 528 and "Duration" field 530 can then be modified, for example, to change the duration to suitable duration. Still other screens may be rendered for providing the availability information to the user, for example.

In the above-described example, a recipient of an e-mail selects an option to reply with a meeting request. It will be appreciated that selection of an option to reply with a meeting request is not limited to a recipient of the e-mail as it is contemplated that the sender of the e-mail may select such an option. The method steps are similar to those described above and therefore are not further described. Further, it will be appreciated that e-mail messages may have further recipients in, for example, a "Cc" field (not shown in Figure 7). Recipients from such a field may also be automatically populated in the "Invited" field of the calendar event record scheduling interface. Further, recipients from the different fields of "To" and "Cc" may be included in the "Invited" field, for example, as required and optional attendees, respectively.

In another embodiment, the calendar event data records for the invitees may be used to determine the first time period of a suitable threshold minimum duration and this first time period may be used to populate the "Start" field 526, the "End" field 528 and the "Duration" field 530, for example. Thus, the availability information is rendered in the fields of the calendar event record scheduling interface and the user does not select the time.

In other embodiments, the calendar data records at the host system 250 may be obtained and sent to the portable electronic device 100 for determination of the free time periods at the portable electronic device 100.

In the embodiments described above, the "Notes" field 440 is automatically populated with the body 402 of the e-mail message. In another embodiment, attachments to the e-mail are also included as an embedded attachment in the calendar event record scheduling interface and in the calendar event data record that is created.

In still another embodiment, rather than populating the "Notes" field 440 with the body 402 of the e-mail message as described above, the entire e-mail message can be embedded as an attachment in the calendar event record scheduling interface and the calendar event record that is created. Thus, the calendar event record also includes any attachments as attachments in the embedded e-mail.

It will now be appreciated that fields of the calendar event record are automatically populated with fields from the electronic mail. Thus, when a user receives a message and wishes to schedule a meeting including, for example, the sender and the recipients of the email message, an option can be selected to schedule a meeting, thereby proceeding to a calendar event record scheduling interface in which the invitee field is automatically populated with the sender and recipients of the email message. Further, a Subject field in the calendar event record scheduling interface can be automatically populated with the Subject field from the e-mail and a further field can be populated with the body from the e-mail. Thus, fewer screens are required to be rendered for creating the calendar event record, thereby reducing power consumption and increasing battery life between charging. Furthermore, fields of the calendar event record are automatically populated, reducing the time required for data entry by the user, further reducing power consumption and increasing battery life between charging by reducing device use time.

The determination of free time periods for invitees based on stored calendar event data for each of the invitees provides availability information for the portable electronic device user and can save further device use time in determining available time periods.

Embodiments can be represented as a software product stored in a machine-readable medium (also referred to as a computer-readable medium, a processor-readable medium, or a computer usable medium having a computer-readable program code embodied therein). The machine-readable medium can be any suitable tangible medium, including magnetic, optical, or electrical storage medium including a diskette, compact disk read only memory (CD-ROM), memory device (volatile or nonvolatile), or similar storage mechanism. The machine-readable medium can contain various sets of instructions, code sequences, configuration information, or other data, which, when executed, cause a processor to perform steps in a method according to an embodiment. Those of ordinary skill in the art will appreciate that other instructions and operations necessary to implement the described features can also be stored on the machine-readable medium. Software running from the machine-readable medium can interface with circuitry to perform the described tasks.

The above-described embodiments are intended to be examples only. Alterations, modifications and variations can be effected to the particular embodiments by those of skill in the art without departing from the scope of the present application, which is defined solely by the claims appended hereto.

## Claims

1. A computer-implemented method of creating a calendar event record, the method comprising:
receiving a selection of an option to schedule a meeting from an electronic mail interface for an electronic mail message and
rendering a calendar event record scheduling interface and automatically populating fields for the calendar event record based on fields from the electronic mail message.

2. The method according to claim 1, wherein automatically populating fields for the calendar event record comprises automatically populating an 'Invited' field with correspondents from message header fields and/or automatically populating a 'Subject' field for the calendar event record with a 'Subject' field from the electronic mail message.

3. The method according to claim 2, wherein the correspondents from the message header fields comprise a sender and at least one recipient of the electronic mail message and wherein automatically populating the 'Invited' field comprises automatically populating with the sender and the at least one recipient.

4. The method according to claim 2 or claim 3, wherein automatically populating fields comprises automatically populating a further field for the calendar event record with a body from the electronic mail message.

5. The method according to any one of claims 1 to 4, comprising attaching the electronic mail message to the calendar event record and/or attaching attachments from the electronic mail message to the calendar event record.

6. The method according to any one of the preceding claims, comprising receiving further calendar event record particulars comprising a start date and time.

7. The method according to any one of the preceding claims, comprising storing the calendar event record in a calendar database in response to receipt of a selection of an option to save.

8. The method according to claim 7, comprising sending an invitation to each of any correspondents in an 'Invited' field in response to receipt of said selection, where said correspondents are populated from message header fields.

9. The method according to any one of the preceding claims comprising:
requesting availability information for any correspondents in an 'Invited' field, where said correspondents are populated from message header fields; and
receiving said availability information for said correspondents in the Invited field.

10. The method according to claim 9 comprising receiving a selection of an available time period for said correspondents from said availability information and populating a 'Date' and 'Time' field for the calendar event record based on the selection.

11. The method according to any one of the preceding claims, comprising:
obtaining calendar event record data for any correspondents in an 'Invited' field, where said correspondents are populated from message header fields;
determining at least one free time period for said correspondents in the 'Invited' field based on said calendar event record data; and
determining a free time period for said correspondents in the 'Invited' field.

12. The method according to claim 10, comprising automatically populating a 'Time' field for the calendar event record with the free time period for the correspondents

13. The method according to any one of claims 1 to 10, comprising:
obtaining calendar event record data for any correspondents in an 'Invited' field, where said correspondents are populated from message header fields;
determining at least one free time period for said correspondents in the Invited field based on said calendar event record data; and
creating a list of the free time periods for said correspondents in the Invited field.

14. The method according to claim 13, comprising populating a 'Time' field for the calendar event record with one of the free time periods in response to receipt of a selection of the one of the free time periods from the list.

15. An electronic device for creating a calendar event record, the electronic device comprising:
an output unit;
an input unit;
a memory device;
a processor connected to the memory device, the input unit, and the output unit; and
an application stored in the memory device for execution by the processor for causing the electronic device to implement the steps of the method of any one of claims 1 to 14.

16. A computer program product for an electronic device, the computer program product comprising a computer-readable medium having computer-readable code embodied executable by a processor of the electronic device for causing the electronic device to implement the steps of the method of any one of claims 1 to 14.

## Amended claims

### Amended claims in accordance with Rule 137(2) EPC.

**1.** A computer-implemented method of creating a calendar event record, the method comprising:
receiving a selection of an option to schedule a meeting from an electronic mail interface for an electronic mail message; and
rendering a calendar event record scheduling interface and automatically populating fields for the calendar event record based on fields from the electronic mail message, wherein automatically populating fields for the calendar event record comprises:
automatically populating an 'Invited' field with correspondents from message header fields and/or automatically populating a 'Subject' field for the calendar event record with a 'Subject' field from the electronic mail message; and
automatically populating a further field for the calendar event record with a body from the electronic mail message.

**2.** The method according to claim 1, wherein the correspondents from the message header fields comprise a sender and at least one recipient of the electronic mail message and wherein automatically populating the 'Invited' field comprises automatically populating with the sender and the at least one recipient.

**3.** The method according to claim 1 or 2, comprising attaching the electronic mail message to the calendar event record and/or attaching attachments from the electronic mail message to the calendar event record.

**4.** The method according to any one of the preceding claims, comprising receiving further calendar event record particulars comprising a start date and time.

**5.** The method according to any one of the preceding claims, comprising storing the calendar event record in a calendar database in response to receipt of a selection of an option to save.

**6.** The method according to claim 5, comprising sending an invitation to each of any correspondents in an 'Invited' field in response to receipt of said selection, where said correspondents are populated from message header fields.

**7.** The method according to any one of the preceding claims comprising:
requesting availability information for any correspondents in an 'Invited' field, where said correspondents are populated from message header fields; and
receiving said availability information for said correspondents in the Invited field.

**8.** The method according to claim 7, comprising receiving a selection of an available time period for said correspondents from said availability information and populating a 'Date' and 'Time' field for the calendar event record based on the selection.

**9.** The method according to any one of the preceding claims, comprising:
obtaining calendar event record data for any correspondents in an 'Invited' field, where said correspondents are populated from message header fields;
determining at least one free time period for said correspondents in the 'Invited' field based on said calendar event record data; and
determining a free time period for said correspondents in the 'Invited' field.

**10.** The method according to claim 8, comprising automatically populating a 'Time' field for the calendar event record with the free time period for the correspondents.

**11.** The method according to any one of claims 1 to 8, comprising:
obtaining calendar event record data for any correspondents in an 'Invited' field, where said correspondents are populated from message header fields;
determining at least one free time period for said correspondents in the Invited field based on said calendar event record data; and
creating a list of the free time periods for said correspondents in the Invited field.

**12.** The method according to claim 11, comprising populating a 'Time' field for the calendar event record with one of the free time periods in response to receipt of a selection of the one of the free time periods from the list.

**13.** An electronic device (100) for creating a calendar event record, the electronic device (100) comprising:
an output unit;
an input unit;
a memory device (106, 108);
a processor (102) connected to the memory device (106, 108), the input unit, and the output unit; and
an application stored in the memory device (106, 108) executable by the processor (102) to cause the electronic device (100) to implement the steps of the method of any one of claims 1 to 12.

**14.** A computer program product for an electronic device (100), the computer program product comprising a computer-readable medium having computer-readable code embodied therein executable by a processor (102) of the electronic device (100) to cause the electronic device (100) to implement the steps of the method of any one of claims 1 to 12.
